# EUROPEAN PATENT SPECIFICATION

(11) **EP 3 811 670 B1**
(45) Date of publication and mention of the grant of the patent: **27.07.2022**
(21) Application number: 19791441.9
(22) Date of filing: 09.10.2019
(51) Int. Cl.: H04W 36/00, H04L 29/06

(54) **ACCESSING A CORE NETWORK FROM A USER DEVICE THAT DOES NOT SUPPORT PACKET-DATA VOICE CALLS OVER THE CORE NETWORK**
ZUGRIFF AUF EIN KERNNETZWERK VON EINER BENUTZERVORRICHTUNG, DIE PAKETDATENSPRACHANRUFE ÜBER DAS KERNNETZ NICHT UNTERSTÜTZT
ACCÈS À UN RÉSEAU CENTRAL À PARTIR D'UN DISPOSITIF UTILISATEUR QUI NE PREND PAS EN CHARGE DES APPELS VOCAUX DE DONNÉES PAR PAQUETS SUR LE RÉSEAU CENTRAL

(30) Priority: 10.10.2018 US 201862744052 P
(43) Date of publication of application: 28.04.2021
(73) Proprietor: Google LLC, Mountain View, CA 94043 (US)
(72) Inventor: WU, Chih-Hsiang, Mountain View, CA 94043 (US)
(74) Representative: Cupitt, Philip Leslie
(86) International application number: PCT/US2019/055372
(87) International publication number: WO 2020/076934

(56) References cited:
- EP-A1- 3 462 776
- US-A1- 2018 132 141
- INTEL ET AL: "EPS fallback", 3GPP DRAFT; S2-174550_23501_IWK_FALLBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Jose Del Cabo, Mexico; 20170626 - 20170630 25 June 2017 (2017-06-25), XP051303396, Retrieved from the Internet: URL:http://www.3gpp.org/ftp/Meetings_3GPP_ SYNC/SA2/Docs/ [retrieved on 2017-06-25]
- CHARTER COMMUNICATIONS ET AL: "TS 23.501: EPS fallback", 3GPP DRAFT; S2-179055..028 WAS 8637 VOICE REDIR-501 V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Reno, Nevada, USA; 20171127 - 20171201 4 December 2017 (2017-12-04), XP051379956, Retrieved from the Internet: URL:http://www.3gpp.org/ftp/tsg%5Fsa/WG2%5 FArch/TSGS2%5F124%5FReno/Docs/ [retrieved on 2017-12-04]
- MEDIATEK INC: "Domain selection rules and EPS/RAT Fallback", 3GPP DRAFT; C1-186314 DISC DOMAIN SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Vilnius (Lithuania); 20181015 - 20181019 8 October 2018 (2018-10-08), XP051571433, Retrieved from the Internet: URL:http://www.3gpp.org/ftp/tsg%5Fct/WG1%5 Fmm%2Dcc%2Dsm%5Fex%2DCN1/TSGC1%5F112bis%5F Vilnius/docs/C1%2D186314%2Ezip [retrieved on 2018-10-08]

## Description

### FIELD OF THE DISCLOSURE

This disclosure relates to wireless communications and, more particularly, to accessing a core network of a certain core network type by a user device that does not support packet-based voice calls over core networks of this core network type.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

The specification 3rd Generation Partnership Project (3GPP) TS 24.301 relates to a Non-Access-Stratum (NAS) protocol for Evolved Packet System (EPS). According to this specification, a setting at a user device (commonly referred to using the acronym UE, which stands for "user equipment") indicates whether the UE has preferences for data services or voice services. When the UE prefers voice services, the usage setting at the UE is voice-centric. Otherwise, when the UE prefers data services, the usage setting at the UE is data-centric. However, a UE with the voice-centric usage setting still may request access to data services.

Another document, 3GPP TS 24.501, specifies a NAS protocol for a 5G system (5GS). This document describes, in part, domain selection for a UE that originates Protocol Data Unit (PDU) sessions and IP Multimedia Subsystem (IMS) voice calls. Such a UE can communicate with Evolved Universal Mobile Telecommunications System Terrestrial Radio Access (EUTRA) base stations and 5G New Radio (NR) base stations, corresponding to less advanced and more advanced radio access technologies (RATs), respectively. A EUTRA base station can connect to an evolved packet core (EPC) or a more advanced fifth-generation core (5GC), and an NR base station can connect to a 5GC. More particularly, TS 24.501 specifies how the usage setting at the UE, the availability of IMS voice, and the types of RATs and core networks (CNs) the UE supports affect the ability of the UE to originate IMS voice calls. However, there remain situations where, due to limited support of IMS voice calls at the UE and/or the CN, the UE cannot utilize the more advanced RAT for services other than IMS voice calls.

3GPP S2-174550 relates to a proposal for "EPS fallback" functionality in a 5G System in order to allow "voice centric" UEs to remain in the 5G System even when the 5G System indicates that it does not support IMS voice over PS session.

### SUMMARY

The present disclosure generally relates to a UE that enables an access mode in which the UE is capable of operating using a certain RAT when the UE is configured to operate in the voice-centric mode but the UE does not support packet-based voice calls, such as IMS voice calls, for this RAT.

The claims provide: a method for use in a user device, as recited by claim 1; a user device as recited by claim 9; and a non-transitory medium, as recited by claim 10.

One example of these techniques is a method in a user device that supports a first RAT and a second RAT. The method includes enabling, by processing hardware, an access mode in which the user device is capable of operating using the second RAT and selecting a cell in which a base station operates according to the second RAT, when the user device is configured to operate in a voice-centric mode, and when the user device supports packet-based voice calls over the first RAT but not over the second RAT.

The present disclosure also relates to a method in a cellular infrastructure for supporting packet-based voice calls. The method includes determining, by processing hardware, that a second core network (CN) of the cellular infrastructure having a second CN type supports a fallback procedure for redirecting or handing over a packet-based voice call to a first CN of a first CN type. The method further includes providing, by the processing hardware, an indication that the second CN supports the fallback procedure to a user device via a cell of a base station connected to the second CN.

### BRIEF DESCRIPTION OF THE DRAWINGS

Fig. 1 is a block diagram of an example wireless communication network in which a user device of this disclosure can select a EUTRA cell with a base station connected to an EPC or a 5GC, or an NR cell with a base station connected to a 5GC;
Fig. 2 illustrates example processing hardware of the user device of Fig. 1;
Fig. 3 is a flow diagram of an example method in the user device of Fig. 1 for registering with a 5GC via a 5G NR cell and then registering with an IP Multimedia Subsystem (IMS);
Fig. 4 is a flow diagram of another example method in the user device of Fig. 1 for selecting a cell and connecting to a core network;
Fig. 5 is a messaging diagram of an example scenario in which a 5GC indicates support of EPS fallback for IMS voice;
Fig. 6 is a messaging diagram of an example scenario in which a next-generation Node B (gNB) indicates support of the corresponding 5GC of EPS fallback for IMS voice;
Fig. 7 is a flow diagram of an example method in a 5GC for indicating support of EPS fallback for IMS voice;
Fig. 8 is a flow diagram of an example method in a gNB for indicating support of EPS fallback for IMS voice;
Fig. 9 is a flow diagram of an example method for enabling access to a CN, which can be implemented in the user device of Fig. 1; and
Fig. 10 is a flow diagram of an example method for providing an indication of support of a fallback procedure for redirecting or handing over packet-based voice calls, which can be implemented in a component of the cellular infrastructure of Fig. 1.

### DETAILED DESCRIPTION OF THE DRAWINGS

The techniques of this disclosure can be implemented in a UE and/or in a cellular infrastructure, e.g., in a base station or a CN. Generally speaking, these techniques expand the set of scenarios in which a UE that supports a less advanced RAT as well as a more advanced RAT can use the more advanced RAT to access the corresponding CN, when the UE and/or the CN does not support a packet-based voice call over the more advanced RAT. For example, the UE can establish a data packet session for Internet services in a cell that operates according the more advanced RAT.

These techniques are discussed below with example reference to Evolved Universal Mobile Telecommunications System Terrestrial Radio Access (EUTRA) and New Radio (NR) as the less advanced RAT and the more advanced RAT, respectively. Further, the examples relate to evolved packet core (EPC) and fifth-generation core (5GC) as the less advanced CN type and the more advanced CN type, respectively. However, in general the techniques of this disclosure can apply to other pairs (or, potentially, larger numbers) of core networks and radio access technologies.

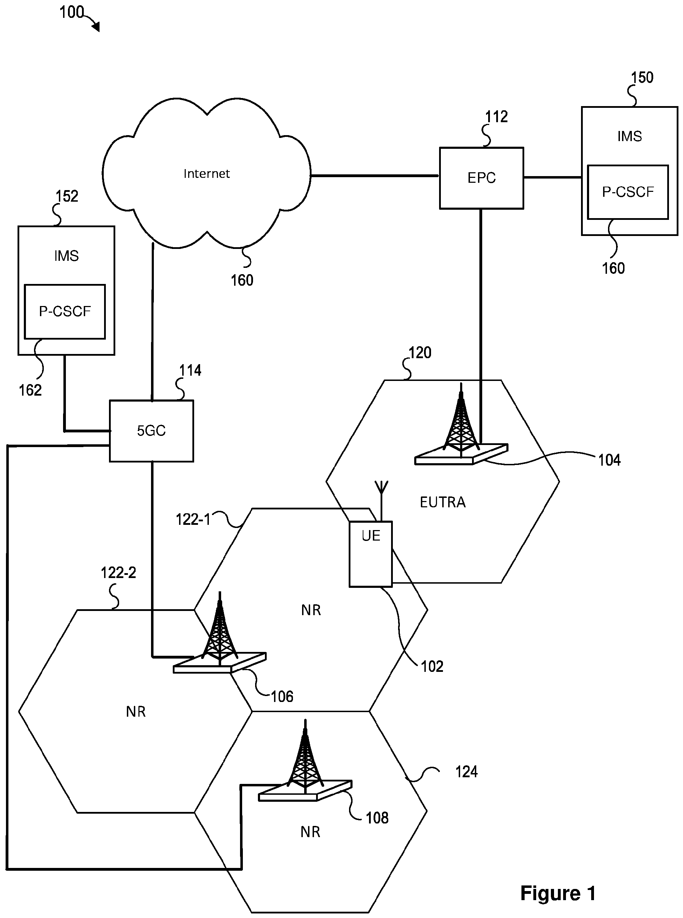

Referring first to Fig. 1, a UE 102 can operate in an example wireless communication network 100. As discussed below, the UE 102 can be any suitable device capable of wireless communications. The wireless communication network 100 includes a EUTRA base station 104 connected to an EPC 112, a 5G NR base station 106 connected to a 5GC 114, and a 5G NR base station 108 connected to the 5GC 114. The base station 104 operates as an evolved Node B (eNB), and the base stations 106 and 108 operate as next-generation eNBs (gNBs). The base station 104 covers a EUTRA cell 120. The base station 106 covers NR cells 122-1 and 122-2, and the base station 108 covers an NR cell 124.

The UE 102 can support EUTRA and 5G NR (or simply, "NR") air interfaces. When the UE 102 operates in the EUTRA cell 120, the UE 102 exchanges messages with the base station 104 using the EUTRA air interface. However, when the UE 102 operates in one of the NR cells 122-1, 122-2, or 124, the UE 102 exchanges messages with the corresponding base station 106 or 108 using the 5G NR air interface.

In general, the wireless communication network 100 can include any number of base stations, and each of the base stations can cover one, two, three, or any other suitable number of cells. Further, the wireless communication network 100 in some implementations can include a EUTRA base station connected to a 5GC rather than an EPC, and accordingly the UE 102 in some cases can access a 5GC via the EUTRA air interface.

The EPC 112 and the 5GC 114 can be connected to an IMS 150 and an IMS 152, respectively. The IMS 150 or 152 can support the Session Initiation Protocol (SIP) and the Internet Protocol (IP), and include control servers or modules to implement various Call Session Control Functions (CSCFs). In particular, the IMS 150 includes a Proxy CSCF (P-CSCF) module 160, and the IMS 152 includes a P-CSCF module 162. UEs such as the UE 102 can exchange messages with the P-CSCF module 160 or 162 during IMS registration, as discussed below. In addition to a P-CSCF module, the IMS 150 or 152 can include an Interrogating CSCF (I-CSCF) server, a Home Subscriber (HSS) server, and a Serving CSCF (C-CSCF) module (none shown to avoid clutter). In some implementations, however, the EPC 112 and the 5GC 114 are connected to the same IMS. The EPC 112 and the 5GC 114 also can be connected to the Internet 160. Depending on the implementation, the IMS 150 and the IMS 152 may be the same IMS or different IMSs.

In some example implementations, the UE 102 does not support IMS voice over NR but supports IMS voice over EUTRA. The UE 102 in one such case supports IMS voice over EUTRA when the base station is connected to an EPC ("IMS voice over EUTRA/EPC") but not when the base station is connected to a 5GC ("IMS voice over EUTRA/5GC"). In another case, the UE 102 supports both IMS voice over EUTRA/EPC and IMS voice over EUTRA/5GC. In other implementations, the UE 102 supports IMS voice over EUTRA (via EPC, 5GC, or both) and also supports IMS voice over NR.

The 5GC 114 in some implementations supports IMS voice over NR. In other implementations, the 5GC 114 does not support IMS voice over NR. As indicated above, the 5GC 114 in some cases can be accessible via a EUTRA base station, and the 5GC 114 can support IMS voice over EUTRA in some implementations and not support IMS voice over EUTRA in other implementations. The EPC 112 supports IMS voice EUTRA in at least some of the implementations.

Further, the 5GC 114 in some implementations supports the EPS fallback for IMS voice procedure, according to which the 5GC 114 redirects or hands over an IMS voice call from the NR/5GC path to a EUTRA/EPC path. In other implementations, the 5GC 114 does not support EPS fallback for IMS voice. Thus, this description addresses combinations of these three independent variables (UE support for IMS, 5GC support for IMS, and EPS fallback support).

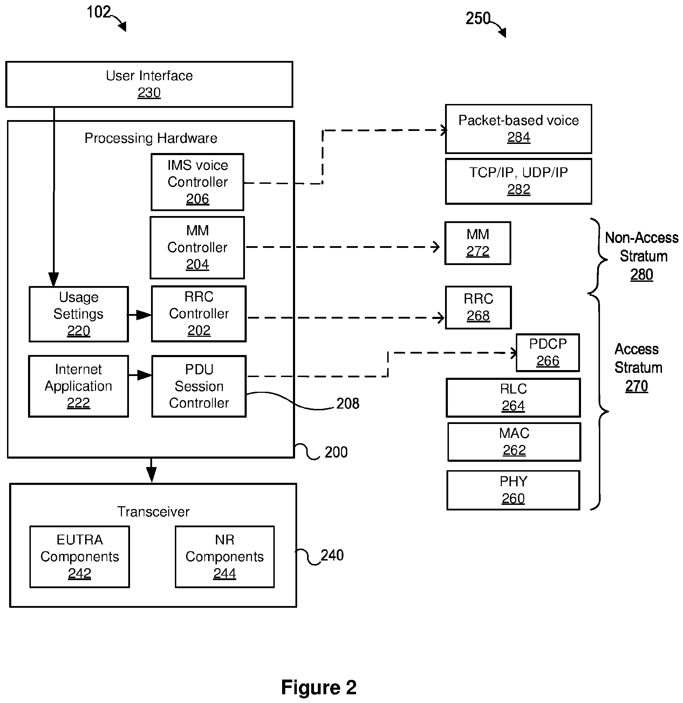

As illustrated in Fig. 2, the UE 102 can be equipped with processing hardware 200 including one or more general-purpose processors (e.g., CPUs) and a non-transitory computer-readable memory storing instructions that the one or more general-purpose processors execute. Additionally or alternatively, the processing hardware 200 can include special-purpose processing units.

The processing hardware 200 can include a radio resource control (RRC) controller 202, a mobility management (MM) controller 204, an IMS voice controller 206, and a PDU session controller 208. Each of the controllers 202, 204, 206, and 208 is responsible for inbound messaging, outbound messaging, and internal procedures at the corresponding layer of the protocol stack 250. In addition to supporting messaging external to the UE 102, the controllers 202, 204, 206, and 208 can exchange internal messages with each other as well as with other components of the UE 102, such as a usage settings module 220 and an Internet application 222, for example. The usage settings module 220 in some cases receives an indication of user's preferences via a user interface 230. Each of the controllers 202, 204, 206, and 208 can be implemented using any suitable combination of hardware, software, and firmware. In one example implementation, the controllers 202, 204, 206, and 208 are sets of instructions that define respective components of the operating system of the UE 102, and one or more CPUs execute these instructions to perform the corresponding functions. In another implementation, some or all of the controllers 202, 204, 206, and 208 are implemented using firmware as a part of the wireless communication chipset.

The processing hardware 200 can send commands and exchange data with a transceiver 240, which can include EUTRA components 242 and NR components 244. In some implementations, the UE 102 can separately activate and supply power to the EUTRA components 242 and the NR components 244. The transceiver 240 can include hardware, firmware, and software components.

The protocol stack 250 includes a physical layer 260 (commonly abbreviated as PHY), a medium access control (MAC) layer 262, a radio link control (RLC) layer 264, a packet data convergence protocol (PDCP) sublayer 266, and the RRC sublayer 268 as part of the access stratum 270. These layers are ordered as illustrated in Fig. 2. The non-access stratum 280 of the protocol stack 250 includes, among other sub-layers, an MM sublayer 272 for exchanging messages related to registration/attachment and location updates, for example. The MM sublayer can correspond to an Evolved MM (EMM) sublayer for evolved packet system (EPS) non-access-stratum (NAS) procedures and a 5G MM (5GMM) sublayer for 5th generation system (5GS) NAS procedures. The protocol stack 250 also can support higher-layer protocols for various services and applications, including for example TCP/IP and UDP/IP layer 282 and a set 284 of protocols for packet-based voice. The controllers 202, 204, 206, and 208 generate outbound messages and process inbound messages corresponding to the layers or sublayers 268, 272, 284, and 266, respectively, as schematically illustrated in Fig. 2. The controllers 202, 204, 206, and 208 also carry out procedures internal to the UE 102.

As discussed in more detail below, the RRC controller 202 can use certain signals to selectively enable the capability of the UE 102 to communicate over 5G NR, referred to in TS 24.501 as "N1 mode capability for 3GPP access" (as used herein, N1 mode capability refers to a certain access mode in which a UE can operate). These signals in various scenarios include indications received from the base stations 106/108 or the 5GC 114, and/or information internal to the UE 102 such as the usage settings 220. For example, the usage settings 220 can indicate whether the UE usage setting is "voice-centric" or "data-centric" as defined in TS 24.301 and as discussed above.

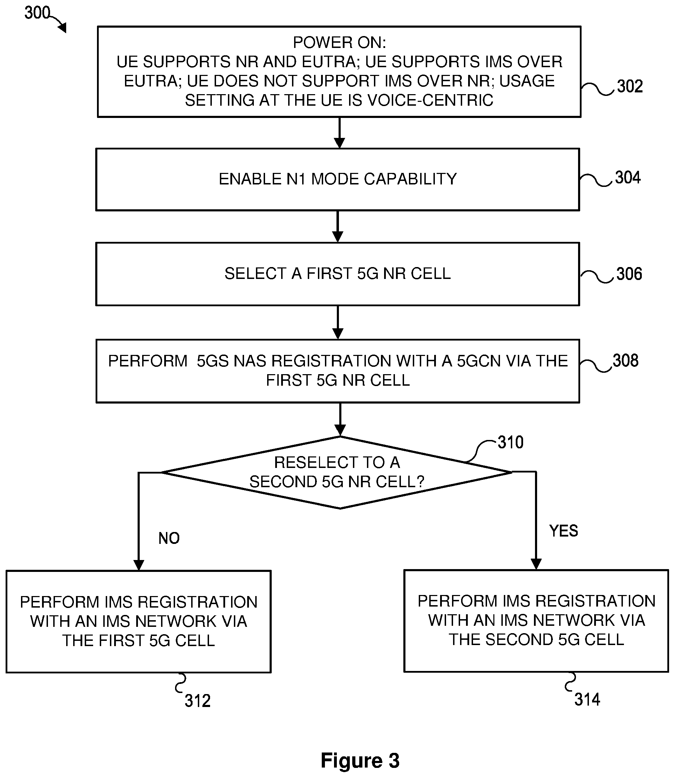

Next, several example methods which the UE 102 can implement and execute when operating in the network 100 are discussed next with reference to Figs. 3-10. The UE 102, the base station 106/108, or the 5GC 114 can implement at least some of the acts of these methods in software, firmware, hardware, or any suitable combination of software, firmware, and hardware. Although Figs. 3-10 are discussed below with reference to these components depicted in Fig. 1, in general any suitable user device or groups of devices can implement these methods and scenarios.

Referring to Fig. 3, an example method 300 for connecting to a 5GC via a 5G NR cell and registering with an IP Multimedia Subsystem (IMS) can be implemented in the UE 102. The method 300 begins at block 302, when the UE 102 powers up and has not yet attached to the EPC or registered with the 5GC. In this disclosure, both the process of attaching to an EPC (which involves the EPS NAS Attach procedure specified in the 3GPP 24.301 v15.3.0 document, for example) and the process of registering with a 5GC (which involves the 5GS NAS Registration procedure specified in the 3GPP 24.501 v15.0.0 document, for example) can be understood as connecting to the corresponding core network. This connecting process may also be expanded to include future wireless core networks.

The UE 102 according to the method 300 supports NR and EUTRA air interfaces. Thus, the UE 102 is capable of exchanging messages with NR and EUTA base stations, such as the base stations 104, 106, and 108 of Fig. 1. The UE 102 also supports IMS over EUTRA/EPC and/or IMS over EUTRA/5GC. The usage setting at the UE 102 is voice-centric within the meaning of 3GPP TS 24.301 or otherwise indicative of the preference for voice calls rather than data sessions, for example.

At block 304, the UE 102 enables the N1 mode capability for 3GPP access. As used herein, enabling of capability can refer to transitioning from the disabled state to the enabled state or, in some cases, not transitioning away from the enabled state and thus remaining in the enabled state.

The UE 102 can enable the N1 mode capability at the level of software, firmware, and/or hardware. Referring back to Fig. 2, for example, when the UE 102 transitions the N1 mode capability from the disabled state to the enabled state, the UE 102 can turn on, wake up, transition from a lower-power mode to a normal, fully powered mode, or otherwise activate the NR components 244 of the transceiver 240. After being activated, the NR components 244 can receive signals at NR carrier frequencies from the NR base stations 106 and 108. In another implementation, the UE 102 does not modify operation of the components of the transceiver 240 at the hardware level. Instead, the processing hardware 200 modifies certain internal settings so that the UE 102 can select an NR cell at the firmware or software level.

Because the UE 102 has enabled the N1 mode capability for 3GPP access at block 304, the UE 102 at block 306 can select a 5G NR cell. Referring back to Fig. 1, for example, the UE 102 can be positioned in the 5G NR cell 122-1 as well as the EUTRA cell 120. As discussed above, the UE 102 in general can obtain a higher data rate in the 5G NR cell 122-1 than in the EUTRA cell 120. Provided the relevant cell selection criteria (e.g., signal strength, signal quality) are satisfied, the UE 102 selects the 5G NR cell 122-1 rather than the EUTRA cell 120.

Next, at block 308, the MM controller 204 or another suitable entity in the UE 102 performs the 5GS NAS registration procedure to connect to the core network. In the example configuration of Figs. 1 and 2, the MM controller 204 of the UE 102 can transmit a 5GS NAS Registration Request message to the 5GC 114 via the 5G NR cell 122-1. The MM controller 204 then can receive a 5GS NAS Registration Accept message from the 5GC 114 via the 5G NR cell 122-1. In response, the MM controller 204 can transmit a 5GS NAS Registration Complete message to the 5GC 114 to successfully complete the 5GS NAS registration procedure.

At block 310, the UE 102 can determine whether the UE 102 should remain in the 5G NR cell selected at block 306 or reselect to a new 5G cell, based on any suitable cell selection/reselection criteria. The UE 102 operating in the environment of Fig. 1 for example can remain in the 5G NR cell 122-1 or reselect to the 5G NR cell 122-2 of the same base station 106 or to the 5G NR cell 124 of another base station 108. When the UE 102 determines to remain in the previously selected 5G NR cell, the flow proceeds to block 312; otherwise, when the UE 102 determines to reselect to a new 5G NR cell, the flow proceeds to block 314.

At block 312 or 314, the UE 102 performs IMS registration with the IMS 152 via the original 5G NR cell selected at block 306 or the new 5G NR cell selected at block 310, respectively. Referring again to Figs. 1 and 2, the PDU session controller 208 of the UE 102 first can perform a PDU session establishment procedure to establish a PDU session between the UE 102 and the 5GC 114, so that the IMS voice controller 206 can exchange SIP messages with the IMS 152 via the 5GC 114 using the established PDU session. The PDU session controller 208 first can transmit a PDU Session Establishment Request message to the 5GC 114 and in response receive a PDU Session Establishment Accept message. The base station 106 then can transmit an RRC Configuration message configuring a data radio bearer (DRB) for the PDU session. The IMS voice controller 206 then can transmit a Session Initiation Protocol (SIP) Register message to the P-CSCF 162 of the IMS 152, and receive the SIP "200 OK" message from the P-CSCF 162 in response.

In contrast to the method 300, if a UE were to disable its N1 mode capability due to the usage setting and lack of IMS/NR voice support as indicated above, the UE would attempt to select a EUTRA cell and accordingly could not use the higher data rate of the 5G NR cell. For example, section 4.3 of TS 24.501 (v15.0.0) proposes that a UE configured as described above with reference to block 302 operate in the "IMS voice not available" mode. In accordance with TS 24.501, a UE positioned in the EUTRA cell 120 and the NR cell 122-1 (see Fig. 1) thus attempts to select the EUTRA cell 120 rather than the NR cell 122-1. As a result, the UE cannot obtain higher data rates of the 5G NR air interface for Internet services and other services.

More specifically, because the UE 102 has enabled its N1 mode functionality according to the method 300, the UE 102 can initiate an Internet service over the 5G NR cell 122-1, 122-2, or 124. The RRC controller 202, the PDU session controller 208, and/or other components of the UE 102 can request that the base station 106 or 108 allocate and configure resources for an Internet session. Referring to the protocol stack 250 of Fig. 2, the base station of the corresponding cell can allocate and configure resources at the PHY layer 260, the MAC layer 262, the RLC layer 264, and the PDCP layer 266, as well as perform radio bearer configuration and other configuration procedures.

In some implementations, the UE 102 enables the N1 mode capability for 3GPP access regardless of whether the 5GC 114 supports IMS voice over NR. In other implementations, however, the UE 102 checks whether the 5GC 114 and/or the base station 106 or 108 has reported support of IMS voice over NR at the 5GC 114, and the UE 102 determines whether to disable its N1 mode capability in view of what the 5GC 114 supports.

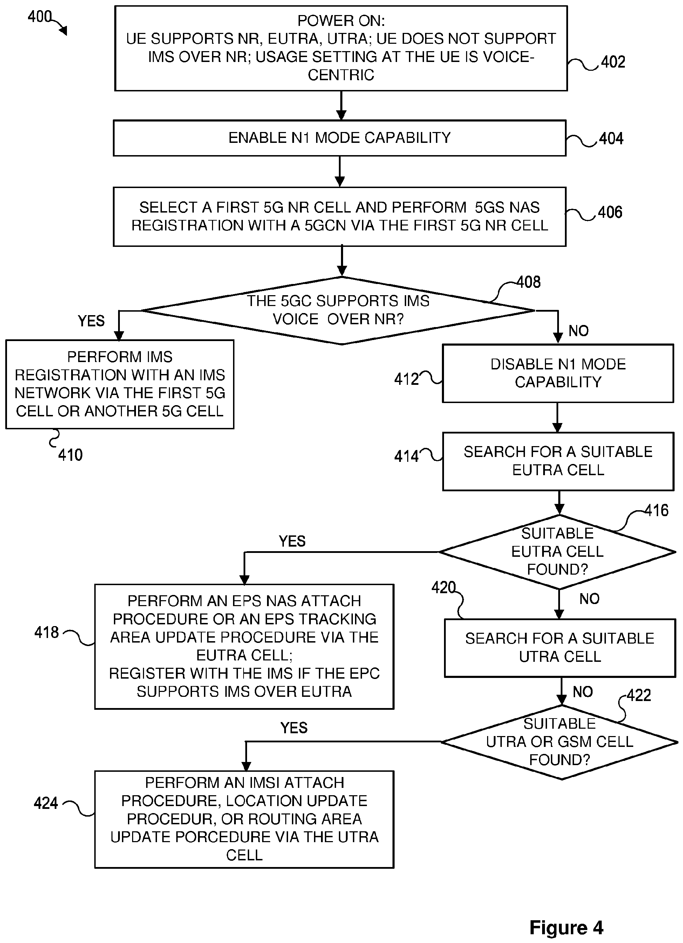

For example, referring to Fig. 4, a method 400 can be implemented in the UE 102 or another suitable user device. Blocks 402 and 404 in the method 400 are similar to blocks 302 and 304 of the method 300, and block 406 is similar to blocks 306 and 308 discussed above.

The UE 102 at block 408 determines whether the 5GC 114 supports IMS voice over NR. The determination can be based on the "IMS voice over PS session indicator" which the 5GC 114 transmits to the UE 102 in some cases. The acronym "PS" in this message corresponds to "packet switched." In one such implementation, the 5GC 114 includes the IMS voice over PS session indicator in the 5GS NAS Registration Accept message. In another implementation, the 5GC 114 includes the IMS voice over PS session indicator in the Configuration Update Command or another unsolicited message. In still another implementation, the 5GC 114 provides the IMS voice over PS session indicator in response to the UE 102 querying the 5GC 114 regarding IMS voice over NR support. In yet another implementation, the base station 106 or 108 broadcast the IMS voice over PS session indicator in the system information block (SIB), in the corresponding 5G NR cells.

In some implementations, the 5GC 114 transmits the IMS voice over PS session indicator to indicate support of the EPS fallback for IMS voice procedure. In one such implementation, the 5GC 114 does not support IMS over NR but supports EPS fallback for IMS voice. More specifically, the 5GC 114 can transmit the IMS voice over PS session indicator when the 5GC 114 supports IMS voice over NR along with EPS fallback for IMS voice, or when the 5GC 114 does not support IMS voice over NR but supports EPS fallback for IMS voice. To the UE 102, the IMS voice over PS session indicator can indicate that the 5GC supports both IMS voice over NR and EPS fallback for IMS voice, but the UE 102 does not rely on support of IMS voice over NR at the 5GC 114 because the UE 102 itself does not support IMS over NR. When the 5GC 114 or the base station 106/108 supports neither IMS voice over NR nor EPS fallback for IMS voice, the 5GC 114 can omit the IMS voice over PS session indicator from messages to the UE 102.

In other implementations, the 5GC 114 transmits the IMS voice over PS session indicator to indicate support of IMS over NR without also indicating support of EPS fallback for IMS voice. The 5GC 114 in these implementations can utilize another mechanism for indicating support or lack of support of EPS fallback for IMS voice. For example, the 5GC 114 can provide a separate "EPS fallback for IMS voice indicator" to the UE 102. The EPS fallback for IMS voice indicator in this case is independent of the IMS voice over PS session indicator. In various implementations and/or scenarios, the 5GC 114 can provide the EPS fallback for IMS voice indicator in the 5GS NAS Registration Accept message, in the Configuration Update Command or another unsolicited message, in response to the UE 102 querying the 5GC 114 regarding EPS fallback for IMS voice support, etc. As a more specific example, the UE 102 can transmit a Registration Request message to the 5GC 114 and in response receive a Registration Accept message including the EPS fallback for IMS voice indicator to indicate support of EPS fallback for IMS voice, or not including the EPS fallback for IMS voice indicator to indicate lack of support of EPS fallback for IMS voice. Further, the Registration Accept message in this implementation can separately indicate support or lack of support of IMS voice over NR by including or not including the IMS voice over PS session indicator.

In some implementations, the 5GC 114 supports IMS over NR but does not support EPS fallback for IMS voice. When the 5GC 114 receives, from the base station 106 or 108, an indication that the UE 102 does not support IMS voice over NR, the 5GC 114 does not transmit the IMS voice over PS session indicator to the UE 102. On the other hand, when the 5GC 114 receives, from the base station 106 or 108, an indication that the UE 102 supports IMS voice over NR, the 5GC 114 transmits the IMS voice over PS session indicator to the UE 102. The base station 106 or 108 can determine whether the UE 102 supports IMS voice over NR using the UE-NR-Capability information element (IE), for example.

Further, when the 5GC 114 supports the IMS voice over NR or the EPS fallback for IMS voice, but the 5GC 114 does not allow the UE 102 is to use the IMS voice over NR or the EPS fallback for IMS voice, the 5GC 114 may determine to not transmit the IMS voice over PS session indicator or the EPS fallback for IMS voice indicator to the UE 102. In other words, the 5GC 114 in this implementation may determine to transmit the IMS voice over PS session indicator or the EPS fallback for IMS voice indicator to the UE 102 when (i) the 5GC 114 supports IMS voice over NR or the EPS fallback for IMS voice, and (ii) the 5GC 114 allows the UE 102 to use IMS voice over NR or EPS fallback for IMS voice. The 5GC 114 allows the UE 102 to use IMS voice over NR or EPS fallback for IMS voice if subscription information for the UE 102 stored in the 5GC 114 indicates the UE 102 subscribes to the IMS voice over NR or the EPS fallback for IMS voice. The 5GC 114 does not allow the UE 102 to use IMS voice over NR or EPS fallback for IMS voice if the subscription information for the UE 102 stored in the 5GC 114 indicates the UE 102 does not subscribe to IMS voice over NR or EPS fallback for IMS voice.

In some implementations, the base station 106 or 108 broadcasts the EPS fallback for IMS voice indicator in the system information block (SIB), in the corresponding 5G NR cells. When the base station 106 or 108 does not broadcast the EPS fallback for IMS voice indicator in the SIB, the base station 106 or 108 effectively notifies the UEs operating in the cell that the 5GC does not support EPS fallback for IMS voice.

With continued reference to Fig. 4, when the UE 102 at block 408 determines that the 5GC 114 supports IMS voice over NR, the UE 102 at block 410 can perform IMS registration with the IMS 152 via the original NR cell or an NR cell selected subsequently to registering with the 5GC 114, similar to block 312 or block 314 discussed above. However, when the UE 102 determines that the 5GC 114 does not support IMS voice over NR, the flow proceeds to block 412.

At block 412, the UE 102 can disable its N1 mode capability for 3GPP access. The UE 102 can disable the N1 mode capability at the level of software, firmware, and/or hardware. Referring back to Fig. 2, for example, the UE 102 can transition the NR components 244 of the transceiver 240 into a low-power mode, a sleep mode, or completely disable the NR components 244. The UE 102 as a result cannot search for a cell on a frequency in the NR frequency band. In another implementation, the UE 102 does not disable the NR components 244 or transition these components into a different mode, and instead modifies operations related to 5G NR cells in the software and/or the firmware of the UE 102. The UE 102 for example can update various settings in the memory of the processing hardware 200 so that the UE 102 does not search for NR cells when the N1 mode capability is disabled, or the UE 102 does not select any NR cells when the N1 mode capability is disabled.

At block 414, the UE 102 can search for a suitable EUTRA cell. If the UE 102 determines that it has found a suitable EUTRA cell (block 416), the flow proceeds to block 418, where the UE 102 performs the EPS NAS Attach procedure with the EPC 112. For example, referring back to Figs. 1 and 2, the MM controller 204 can transmit an EPS NAS Attach Request message to the EPC 112, receive an EPS NAS Attach Accept message from the EPC 112 in response to the EPS NAS Attach Request message, and then transmit an EPS NAS Attach Complete message. In other situations, the UE 102 performs the EPS NAS Tracking Area Update procedure at block 418. The UE 102 in this case transmits an EPS Tracking Area Update Request message to the EPC 112, receives an EPS NAS Tracking Area Update Accept message from the EPC 112 in response to the EPS Tracking Area Update Request message, and completes the procedure by transmitting an EPS NAS Tracking Area Update Complete message.

After the UE 102 successfully attaches to the EPC 112 upon completing the EPS NAS Attach procedure or the EPS NAS Tracking Areas Update procedure, the UE 102 can perform the IMS Registration Procedure with the IMS 152 over the EUTRA cell, if the UE 102 supports IMS over EUTRA. The UE 102 can perform IMS registration over the same EUTRA cell selected for the EPS NAS Attach or EPS NAS Tracking Areas Update procedure, or the UE 102 can select a different EUTRA cell for IMS registration.

However, when the EPC 112 does not support IMS voice, the UE 102 in one implementation does not disable its EUTRA capability (or S1 mode capability) and remains attached to the EPC 112. The UE 102 in this case can omit IMS registration with the IMS 152 and may transmit a circuit-switched (CS) fallback request to the EPC 112 to make a CS call or receive a CS call. The EPC 112 can provide an indication of whether the EPC 112 supports IMS voice in the EPS NAS Attach Accept message or the EPS NAS Tracking Area Update Accept message. Alternatively, the EUTRA base station 104 can broadcast an indication that the EPC 112 supports IMS voice in the SIB broadcast in the EUTRA cell 120.

If the UE 102 determines at block 416 that no suitable EUTRA cell is available, the flow proceeds to block 420, where the UE 102 searches for a suitable UTRA cell or a Global System for Mobile communications (GSM) cell. If the UE 102 determines that it has found a suitable UTRA or GSM cell (block 422), the flow proceeds to block 424, where the UE 102 performs an IMSI Attach procedure, a Location Update procedure, a General Packet Radio Service (GPRS) attach procedure, or a Routing Area Update procedure via the suitable UTRA or GSM cell to attach to a core network of the UTRA or GSM cell. When the UE 102 attaches to the core network of the UTRA or GSM cell, the UE 102 may make a CS call via the UTRA or GSM cell to the core network or receive a CS call via the UTRA or GSM cell from the core network. Otherwise, if the UE 102 has not found a suitable UTRA or GSM cell, the flow in various scenarios can return to block 404, 414, or 420.Referring to both Fig. 3 and Fig. 4, after the UE 102 completes IMS registration at block 312, 314, or 410, the UE 102 can initiate a mobile-originated (MO) IMS voice call or session in an 5G NR cell and fall back on a EUTRA cell. These steps are discussed in more detail below.

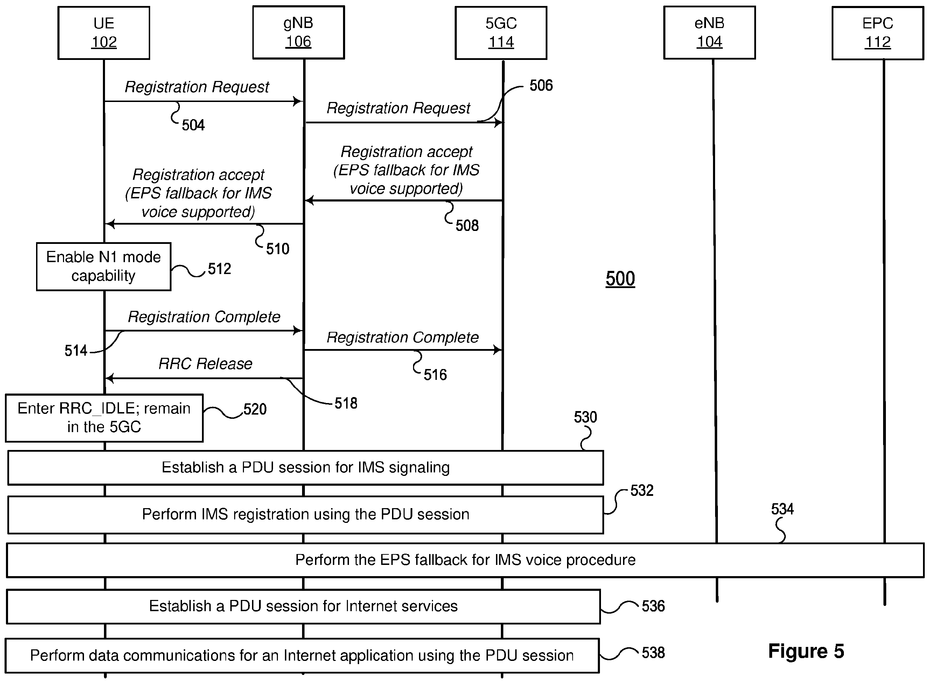

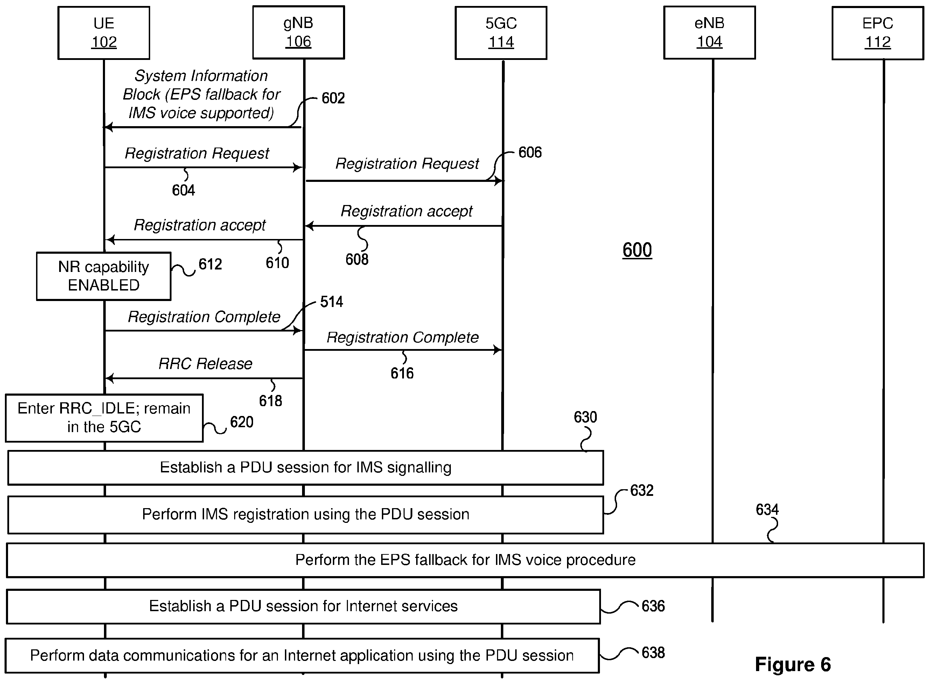

In the scenarios of Figs. 5 and 6 discussed next, the UE 102 supports EUTRA and NR air interfaces. The UE 102 in some cases does not support IMS voice over NR but supports IMS voice over EUTRA. In other cases, the UE 102 supports IMS voice over NR as well as IMS voice over EUTRA, but the 5GC 114 does not support IMS voice over NR. The usage setting at the UE 102 can be voice-centric or data centric. Because the UE 102 supports EPS fallback for IMS voice, the UE 102 in the scenarios of Figs. 5 and 6 enables its N1 mode capability to use 5G NR for certain services (e.g., Internet services).

Referring first to a messaging diagram 500 of Fig. 5, the UE 102 transmits 504 a Registration Request message over the 5G NR air interface to the gNB 106, which forwards 506 the Registration Request message to the 5GC 114. The UE 102 in this scenario can operate in the 5G NR cell 122-1. The 5GC 114 responds 508 with a Registration Accept message including an indication that the 5GC 114 supports EPS fallback for IMS voice. In other words, the 5GC 114 transmits the EPS fallback for IMS voice indicator to the UE 102. The gNB 106 forwards 510 the Registration Accept message to the UE 102.

The UE 102 enables 512 N1 mode capability in response to the Registration Accept message indicating EPS fallback for IMS voice support and in view of the UE 102 supporting the 5G NR air interface, IMS voice over EUTRA, and EPS fallback for IMS voice. The UE 102 in this scenario does not support IMS over NR. As indicated above, the UE 102 can transition from the disabled state to the enabled state or remain in the enabled state.

The UE 102 transmits 514 a Registration Complete message to the gNB 106, which forwards 516 the Registration Complete message to the 5GC 114. The gNB 106 then transmits 518 an RRC Release message to the UE 102 to complete the RRC procedure.

Because the UE 102 has not disabled its N1 mode capability at block 512 or afterwards to this point in time, the UE 102 continues 520 to camp in the 5G NR cell 122-1, in the RRC_IDLE state. Subsequently, the UE 102 can establish 530 a PDU session for IMS signaling and perform 532 IMS registration with the IMS 152 via the 5GC 114 using the established PDU session. As discussed above, the PDU session controller 208 of the UE 102 can transmit a PDU Session Establishment Request message to the 5GC 114 and in response receive a PDU Session Establishment Accept message. The IMS voice controller 206 then can transmit a SIP Register message to the P-CSCF 162 of the IMS 152, and receive the SIP "200 OK" message from the P-CSCF 162 in response.

The 5GC 114 at some point can perform the EPS fallback for IMS voice procedure 534. In particular, the user of the UE 102 may wish to originate a phone call, and the IMS voice controller 206 can receive the corresponding request from the user interface 230. The IMS voice controller 206 can transmit a SIP Invite message to the P-CSCF 162 via the gNB 106 and the 5GC 114, so as to establish an MO IMS voice call. The 5GC 114 accordingly can perform a PDU Session Modification procedure with the gNB 106. However, because the UE 102 does not support IMS voice over NR, the gNB 106 determines that it should hand over or redirect the UE 102 to a EUTRA base station connected to an EPC, e.g., the eNB 104 connected to the EPC 112, so that the UE 102 can establish an MO IMS voice call via EUTRA/EPC.

In some implementations, the gNB 106 is aware that the UE 102 does not support IMS voice over NR because the UE 102 has not reported such capability when establishing an RRC connection. For example, the 3GPP recently proposed to modify TS 38.306 with specification R2-1813437 to introduce a field "voiceOverMCGBearer." This field is to be transmitted from a UE to indicate that the UE supports IMS over NR PDCP for master cell group (MCG) bearer in NR. The UE can include this field in the UE-NR-Capability information element (IE) and transmit the IE to the base station. Thus, the UE 102 in one example implementation transmits a UE-NR-Capability IE to the gNB 106 and does not include the voiceOverMCGBearer field in the IE, effectively notifying the gNB 106 (or, in some cases, the gNB 108) that the UE 102 does not support IMS voice over NR. More generally, the UE 102 can notify the gNB 106 that the UE 102 does not support IMS voice over NR using any suitable explicit or implicit indication.

As a part of the procedure 534, the gNB 106 can transmit to the UE 102 a MobilityFromNRCommand message including a RRCConnectionReconfiguration message to direct the UE 102 to the EUTRA cell 120 and accordingly to the eNB 104. In response to receiving the MobilityFromNRCommand message, the UE 102 can connect to the eNB 104 and then execute the EPS NAS Attach Procedure or the EPS NAS Tracking Area Update procedure to attach to the EPC 112. In another example scenario, the gNB 106 determines that the gNB 106 should redirect the UE 102 to the eNB 104 and transmits a RRCRelease message to the UE 102. The RRCRelease message in this case includes EUTRA carrier information to configure the UE 102 with the EUTRA carrier frequency, particularly the carrier frequency of eNB 104. The UE 102 then can select the EUTRA cell 120 of the eNB 104 in accordance with this information. Similar to the example above, the UE 102 can execute the EPS NAS Attach Procedure or the EPS NAS Tracking Area Update procedure to attach to the EPC 112. Meanwhile, the gNB 106 does not set up radio resources for communicating IMS voice packets of an IMS voice call, according to the procedure 534. When the UE 102 completes EPS NAS Attach Procedure or the EPS NAS Tracking Area Update Accept message via the eNB 104, the UE 102 exchanges SIP messages with the IMS 150 via the EPC 112 to establish the IMS MO voice call with the IMS 150. When the UE 102 ends the IMS MO voice call, the eNB 104 may transmit an RRC Connection Release message to the UE 102. If the RRC Connection Release message includes the redirection information configuring an NR carrier frequency, the UE 102 searches a cell on the NR carrier frequency. If the RRC Connection Release message does not include the redirection information, the UE 102 may search a cell according to the NR carrier information stored in the UE 102. The NR carrier information includes a carrier frequency of the gNB 106. Thus, the UE 102 again can obtain the relatively high data rate via NR.

The UE 102 may indicate support of handover to EUTRA/EPC or redirection to EUTRA/EPC in the UE-NR-Capability IE. The gNB 106 may transmit MobilityFromNRCommand message if the UE-NR-Capability IE indicates that the UE 102 supports handover to EUTRA/EPC. The gNB 106 may transmit the RRCRelease message if the UE-NR-Capability IE indicates that the UE 102 supports redirection to EUTRA/EPC.

With continued reference to Fig. 5, the UE 102 can perform other procedures via the gNB 106 to utilize the generally higher data rate of NR. For example, the UE 102 can establish 536 a PDU session for Internet services and perform 538 data communications for an Internet application. Similar to establishing a PDU session for IMS signaling, establishing a PDU session as a part of the procedure 538 can include the UE 102 transmitting a PDU Session Establishment Request message to the 5GC 114, receiving a PDU Session Establishment Accept message from the 5GC 114, and the base station 106 transmitting an RRC Reconfiguration message configuring at least one DRB for the PDU session. After the PDU session is successfully established, the PDU session controller 208 can transmit and receive data packets over TCP/IP, UDP/IP, HTTP/TCP, etc. from various applications and services operating in the UE 102. For example, the data packets can include web browser packets, mailer application packets, audio streaming packets, SIP packets, voice packets, etc.

The UE 102 generally can perform the procedures 530, 532, 534, 536, and 538 whenever requested and in any suitable order. For example, the UE 102 first can establish a PDU session for Internet services and then establish a PDU session for IMS signaling.

Next, a messaging diagram 600 of Fig. 6 illustrates a scenario generally similar to the scenario of Fig. 5, except that the UE 102 in this case receives an indication that the 5GC 114 supports EMS fallback for IMS voice from the gNB 106.

In particular, the gNB 106 in this scenario transmits 602 an SIB and includes the EPS fallback for IMS voice indication in the SIB. A UE operating in the 5G NR cell 122-1 or 122-2 of the gNB 106 can determine that the 5GC 114 supports EPS fallback for IMS voice in response to receiving the EPS fallback for IMS voice indication in the SIB. Conversely, when the UE operating in the 5G NR cell 122-1 or 122-2 of the gNB 106 receives a SIB that does not include the EPS fallback for IMS voice indication, the UE can determine that the 5GC 114 does not support EPS fallback for IMS voice. The gNB 106 can determine that the SIB should include the EPS fallback for IMS voice indication based on a corresponding indication received from the 5GC 114 using the Action Message Format (AMF) for example, a pre-set configuration, the result of querying the 5GC 114, etc.

Similar to the scenario of Fig. 5, the UE 102 UE 102 transmits 604 a Registration Request message over the 5G NR air interface to the gNB 106, which forwards 606 the Registration Request message to the 5GC 114. The 5GC 114 responds 608 with a Registration Accept message, and the gNB 106 forwards 610 the Registration Accept message to the UE 102. However, unlike the Registration Accept message that the gNB 106 transmits to the UE 102 in the scenario of Fig. 5, the Registration Accept message in the scenario of Fig. 6 does not include the EPS fallback for IMS voice indication. Nevertheless, the UE 102 is aware that the 5GC 114 supports EPS fallback for IMS voice based on the previously received SIB.

In another implementation, however, the 5GC 114 responds to the Registration Request message with a Registration Accept message including the EPS fallback for IMS voice indicator, similar to the Registration Accept message of Fig. 5, even though the UE 102 already is aware that the 5GC 114 supports EPS fallback for IMS voice based on the previously received SIB. Thus, the implementations of Figs. 5 and 6 can be combined if desired.

With continued reference to Fig. 6, the messages and procedures 612-638 are similar to the respective messages and procedures 512-538 discussed above with reference to Fig. 5. Similar to the scenario of Fig. 5, the UE 102 that does not support IMS voice call over NR can utilize certain services, such as Internet services, at the higher rate of 5G NR and not disable its NR capability.

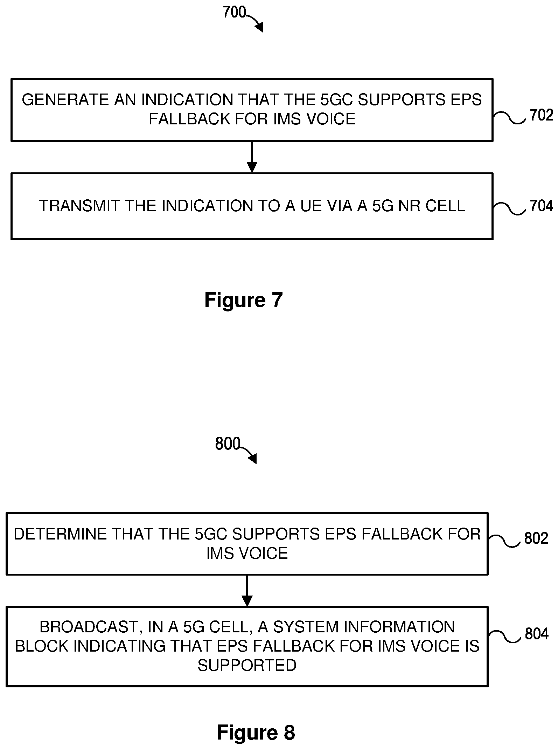

Referring to Fig. 7, an example method 700 for indicating support of EPS fallback for IMS voice to a UE can be implemented in a 5GC, e.g., the 5GC 114.

The method 700 begins at block 702, where the 5GC 114 generates an explicit or implicit indication that the 5GC 114 supports EPS fallback for IMS voice. In one example implementation, the 5GC 114 supports IMS voice over NR as well as EPS fallback for IMS voice, and generates the IMS voice over PS session indicator to implicitly notify the UE 102 that the 5GC 114 also supports EPS fallback for IMS voice. In another example implementation, the 5GC 114 does not support IMS voice over NR but supports EPS fallback for IMS voice, and generates the IMS voice over PS session indicator to implicitly notify the UE 102 that the 5GC 114 supports EPS fallback for IMS voice. According to another implementation, the 5GC 114 uses a separate, explicit indicator EPS fallback for IMS voice to notify the UE 102 that the 5GC 114 supports EPS fallback for IMS voice.

In any case, at block 704 the 5GC 114 can provide an implicit or explicit indicator during a registration procedure, e.g., in the 5GS NAS Registration Accept message, in an unsolicited message to the UE 102 such as the Configuration Update Command message, in response to a query from the UE 102, etc.

Referring next to Fig. 8, an example method 800 for indicating support of EPS fallback for IMS voice to a UE can be implemented in a gNB, e.g., the gNB 106 or 108.

The method 800 begins at block 802, where the gNB 106 or 108 determines that the 5GC 114, to which the gNB 106 or 108 is connected, supports EPS fallback for IMS voice. Depending on the implementation, the gNB 106 or 108 can receive a corresponding indication from the 5GC 114, the gNB 106 or 108 can query the 5GC 114, or the gNB 106 or 108 can be pre-configured with this information. At block 804, gNB 106 or 108 broadcasts the EPS fallback for IMS voice indication in the SIB block.

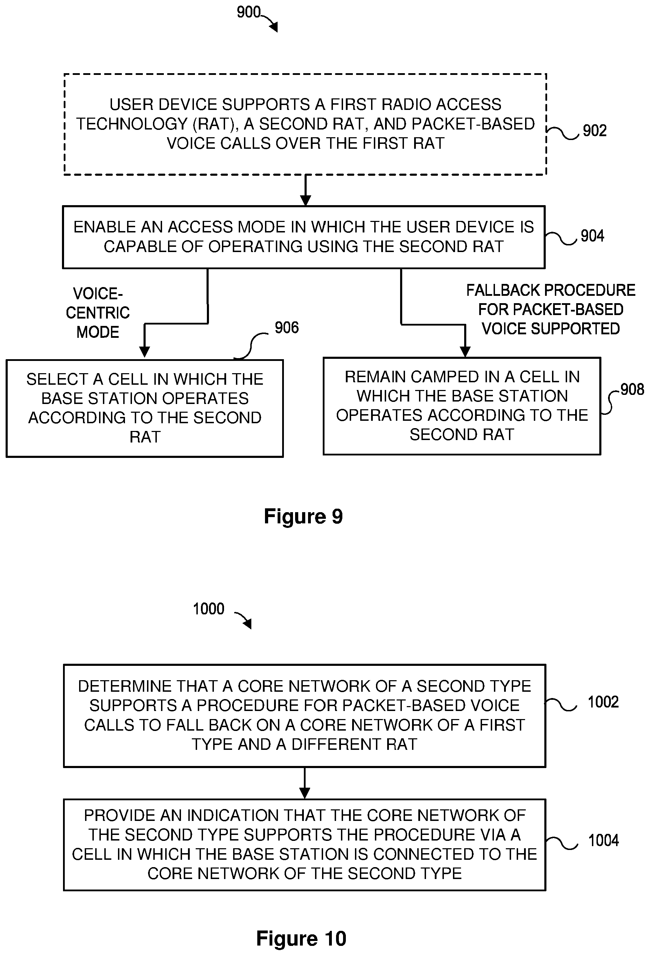

For further clarity, Figs. 9 and 10 illustrate several example methods which a UE or a cellular infrastructure can implement to expand the set of scenarios in which the UE can use a more advanced RAT and access a more advanced core network. The methods of Figs. 9 and 10 can be implemented in hardware, software, firmware, or any suitable combination of hardware, software, and firmware.

Referring first to Fig. 9, the method 900 can be implemented in a user device configured as illustrated at block 902. In particular, the user device supports a first RAT and a second RAT. The second RAT can be more advanced than the first RAT. For example, the UE 102 can support EUTRA and the more advanced 5G NR, in at least some of the scenarios discussed above. Further, the user device can support packet-based voice calls over the first RAT, and support packet-based voice calls over the second RAT in some scenarios and not support packet-based voice calls over the second RAT in other scenarios. The UE 102 for example can support IMS voice over EUTRA. Still further, when the user device supports packet-based voice calls over a certain RAT, the user device can support this functionality over one or more core networks, particularly when the base station that supports the less advanced RAT can connect to the more advanced CN. The UE 102 in the scenarios above can support IMS voice over EUTRA/EPC and/or IMS voice over EUTRA/5GC.

At block 904, the user device can enable an access mode in which the UE is capable of operating using the second RAT (typically, the more advanced RAT). As discussed above, enabling this access mode can include transitioning from the disabled to the enable state or, in other cases, remaining in the enabled state and not transitioning to the disabled state. For example, the user device at block 904 can enable its N1 mode capability for 3GPP access, similar to the UE 102.

At block 906, when the user device supports packet-based voice over the second RAT is configured to operate with preferences for voice services, e.g., as a voice-centric UE as specified by 3GPP TS 24.301 or TS 24.501, the user device selects a cell in which the base station operates according to the second RAT. The user device selects this cell even though the user device operates in the voice-centric mode and does not support packet-based voice calls of the second RAT. For example, the UE 102 can support IMS voice over EUTRA, not support IMS voice over NR, and be configured to operate in the voice-centric mode. The UE 102 selects the 5G NR cell 122-1 rather than the EUTRA cell 120, in which the UE 102 also is positioned in the example scenario depicted in Fig. 1. In this manner, the user device can access certain services, such as various Internet services for example, at the higher rate of the second RAT.

Referring to block 908, when the user device supports a fallback procedure according to which a packet-based voice call can fall back on a different RAT and a different CN, the user device can remain camped in a cell in which the base station operates according to the second RAT. The user device can receive an explicit or an implicit indication from the cellular infrastructure (e.g., a base station, a core network) that the core network supports this procedure. The user device is this case supports packet-based voice over the first (typically, less advanced) RAT. Further, in one scenario the user device also supports packet-based voice over the second RAT, but the core network does not support packet-based voice over the second RAT. In another scenario, the core network supports packet-based voice over the second RAT, but the user device does not support packet-based voice over the second RAT.

Because the user device at block 908 does not disable the access mode in which the user device can communicate in a certain cell using the second RAT, the user device can communicate with the core network to which the base station of the cell is connected. Accordingly, the user device can access various services of the core network and benefit from the higher data rate of the second RAT.

For example, as discussed above, the UE 102 in some scenarios supports IMS voice over EUTRA but not IMS voice over NR. In other scenarios, the 5GC 114 does not support IMS voice over NR. The 5GC 114 or the gNB 106 or 108 can provide an indication to the UE that EPS fallback for IMS voice is supported, and the UE 102 in response can determine to enable (e.g., not disable) N1 mode capability for 3GPP access and continue operating in the 5G NR cell 122-1 or 122-2.

Finally, referring to Fig. 10, a method 1000 can be implemented in a component of a cellular infrastructure such as the core network or a base station. At block 1002, the component of the cellular infrastructure determines whether the core network of one type supports a procedure for packet-based voice calls to fall back on a core network of another, typically less advanced, type, via a base station that supports another, typically less advanced, RAT. The component of the cellular infrastructure then provides an indication that the core network supports this procedure to user devices.

For example, as discussed above, the 5GC 514 or the gNB 106 can determine that the 5GC supports EPS fallback for IMS voice and provides the corresponding indication to the UE 102. Similar to the scenario discussed above, the UE 102 enables the N1 mode capability and accordingly can access various services of the 5GC 514 via the 5G NR interface.

The following additional considerations apply to the foregoing discussion.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

Upon reading this disclosure, those of skill in the art will appreciate still additional alternative structural and functional designs for connecting to a core network through the disclosed principles herein. Thus, while particular embodiments and applications have been illustrated and described, it is to be understood that the disclosed embodiments are not limited to the precise construction and components disclosed herein. Various modifications, changes and variations, which will be apparent to those of ordinary skill in the art, may be made in the arrangement, operation and details of the method and apparatus disclosed herein without departing from the scope defined in the appended claims.

## Claims

1. A method (300) performed by processing hardware (200) associated with a user device (102), wherein the user device (102) is configured to support a first radio access technology, RAT, and a second RAT, and is configured to support packet-based voice calls over the first RAT, and to operate in a voice-centric mode via a usage setting, the method comprising:
enabling (304) an access mode in which the user device (102) is configured to operate using the second RAT; and
selecting (306) a cell (122-1, 122-2, 124) in which a base station (106, 108) operates according to the second RAT even though the user device (102) does not support packet-based voice calls over the second RAT.

2. The method (300) of claim 1, further comprising:
subsequently to selecting the cell in which the base station (106, 108) operates according to the second RAT, registering (308) with a core network (114), CN, via the selected cell.

3. The method (300) of claim 2, further comprising:
registering (312), via the selected cell, with a multimedia subsystem that supports packet-based voice calls.

4. The method (300) of claim 2, further comprising:
selecting or reselecting (310) a new cell in which a base station (106, 108) operates according to the second RAT; and
registering (314), via the selected or reselected new cell, with a multimedia subsystem that supports packet-based voice calls.

5. The method (300) of claim 2, further comprising:
receiving an indication that the CN (114) does not support packet-based voice calls over the second RAT; and
disabling (412) the access mode in which the user device (102) is capable of operating using the second RAT in response to the received indication.

6. The method (300) of claim 1, wherein:
the first RAT is Evolved Universal Mobile Telecommunications System Terrestrial Radio Access, EUTRA, and
the second RAT is 5G New Radio, NR.

7. The method (300) of claim 1, further comprising:
receiving the usage setting via a user interface (230) of the user device (102).

8. The method (300) of claim 1, wherein the selecting occurs in response to the user device (102) powering up or transitioning from a lower-power mode to a fully powered mode, when the user device (102) has not yet attached to a CN (114).

9. A user device (102) configured to operate on a first radio access technology, RAT, and a second RAT, and configured to support packet-based voice calls over the first RAT, and to operate in a voice-centric mode via a usage setting, the user device (102) comprising:
processing hardware (200);
a non-transitory medium storing thereon instructions that, when executed by the processing hardware, cause the user device (102) to perform a method (300) according to any of the preceding claims.

10. A non-transitory medium storing instructions that, when executed by processing hardware (200) of a user device (102), cause the user device to perform a method (300) according to any of claims 1 to 8.

## Patentansprüche

1. Verfahren (300), welches durch eine Verarbeitungshardware (200) durchgeführt wird, welche einer Benutzervorrichtung (102) zugeordnet ist, wobei die Benutzervorrichtung (102) konfiguriert ist, um eine erste Funkzugriffstechnologie, RAT, und eine zweite RAT zu unterstützen, und konfiguriert ist, um paketbasierte Sprachanrufe über die erste RAT zu unterstützen, und um in einem sprachzentrierten Modus mittels einer Nutzungseinstellung zu arbeiten, wobei das Verfahren Folgendes umfasst:
Aktivieren (304) eines Zugriffsmodus, in welchem die Benutzervorrichtung (102) konfiguriert ist, um unter Verwendung der zweiten RAT zu arbeiten; und
Auswählen (306) einer Zelle (122-1, 122-2, 124), in welcher eine Basisstation (106, 108) gemäß der zweiten RAT arbeitet, auch wenn die Benutzervorrichtung (102) paketbasierte Sprachanrufe über die zweite RAT nicht unterstützt.

2. Verfahren (300) nach Anspruch 1, ferner Folgendes umfassend:
nach dem Auswählen der Zelle, in welcher die Basisstation (106, 108) gemäß der zweiten RAT arbeitet, Registrieren (308) bei einem Kernnetzwerk (114), CN, über die ausgewählte Zelle.

3. Verfahren (300) nach Anspruch 2, ferner Folgendes umfassend:
Registrieren (312), über die ausgewählte Zelle, bei einem Multimedia-Teilsystem, welches paketbasierte Sprachanrufe unterstützt.

4. Verfahren (300) nach Anspruch 2, ferner Folgendes umfassend:
Auswählen oder erneut Auswählen (310) einer neuen Zelle, in welcher eine Basisstation (106, 108) gemäß der zweiten RAT arbeitet; und
Registrieren (314), über die ausgewählte oder erneut ausgewählte neue Zelle, bei einem Multimedia-Teilsystem, welches paketbasierte Sprachanrufe unterstützt.

5. Verfahren (300) nach Anspruch 2, ferner Folgendes umfassend:
Empfangen einer Angabe darüber, dass das CN (114) paketbasierte Sprachanrufe über die zweite RAT nicht unterstützt; und
Deaktivieren (412) des Zugriffsmodus, in welchem die Benutzervorrichtung (102) in der Lage ist, unter Verwendung der zweiten RAT zu arbeiten, in Reaktion auf die empfangene Angabe.

6. Verfahren (300) nach Anspruch 1, wobei:
die erste RAT Evolved Universal Mobile Telecommunications System Terrestrial Radio Access, EUTRA, ist, und
die zweite RAT 5G New Radio, NR, ist.

7. Verfahren (300) nach Anspruch 1, ferner Folgendes umfassend:
Empfangen der Nutzungseinstellung über eine Benutzerschnittstelle (230) der Benutzervorrichtung (102).

8. Verfahren (300) nach Anspruch 1, wobei die Auswahl in Reaktion darauf eintritt, dass die Benutzervorrichtung (102) eingeschaltet wird oder von einem Modus mit niedriger Leistung in einen Modus mit voller Leistung übergeht, wenn sich die Benutzervorrichtung (102) noch nicht mit einem CN (114) verbunden hat.

9. Benutzervorrichtung (102), welche konfiguriert ist, um in einer ersten Funkzugriffstechnologie, RAT, und in einer zweiten RAT zu arbeiten, und konfiguriert ist, um paketbasierte Sprachanrufe über die erste RAT zu unterstützen, und um in einem sprachzentrierten Modus mittels einer Nutzungseinstellung zu arbeiten, wobei die Benutzervorrichtung (102) Folgendes umfasst:
Verarbeitungshardware (200);
ein nicht transientes Medium mit darin gespeicherten Anweisungen, welche, wenn sie durch die Verarbeitungshardware ausgeführt werden, die Benutzervorrichtung (102) dazu veranlassen, ein Verfahren (300) nach einem der vorhergehenden Ansprüche auszuführen.

10. Nicht transientes Medium mit darin gespeicherten Anweisungen, welche, wenn sie durch die Verarbeitungshardware (200) einer Benutzervorrichtung (102) ausgeführt werden, die Benutzervorrichtung dazu veranlassen, ein Verfahren (300) nach einem der Ansprüche 1 bis 8 auszuführen.

## Revendications

1. Procédé (300) réalisé par un matériel de traitement (200) qui est associé à un dispositif utilisateur (102), dans lequel le dispositif utilisateur (102) est configuré pour supporter une première technologie d'accès radio, RAT, et une seconde RAT, et est configuré pour supporter des appels vocaux basés sur paquets sur la première RAT, et pour fonctionner dans un mode centré sur la voix via un paramètre d'utilisation, le procédé comprenant :
l'activation (304) d'un mode d'accès dans lequel le dispositif utilisateur (102) est configuré pour fonctionner en utilisant la seconde RAT ; et
la sélection (306) d'une cellule (122-1, 122-2, 124) dans laquelle une station de base (106, 108) fonctionne conformément à la seconde RAT même si le dispositif utilisateur (102) ne supporte pas les appels vocaux basés sur paquets sur la seconde RAT.

2. Procédé (300) selon la revendication 1, comprenant en outre :
subséquemment à la sélection de la cellule dans laquelle la station de base (106, 108) fonctionne conformément à la seconde RAT, l'enregistrement (308) avec un réseau central (114), CN, via la cellule sélectionnée.

3. Procédé (300) selon la revendication 2, comprenant en outre :
l'enregistrement (312), via la cellule sélectionnée, avec un sous-système multimédia qui supporte les appels vocaux basés sur paquets.

4. Procédé (300) selon la revendication 2, comprenant en outre :
la sélection ou la resélection (310) d'une nouvelle cellule dans laquelle une station de base (106, 108) fonctionne conformément à la seconde RAT ; et
l'enregistrement (314), via la nouvelle cellule sélectionnée ou resélectionnée, avec un sous-système multimédia qui supporte les appels vocaux basés sur paquets.

5. Procédé (300) selon la revendication 2, comprenant en outre :
la réception d'une indication du fait que le CN (114) ne supporte pas les appels vocaux basés sur paquets sur la seconde RAT ; et
la désactivation (412) du mode d'accès dans lequel le dispositif utilisateur (102) dispose de la capacité de fonctionner en utilisant la seconde RAT en réponse à l'indication reçue.

6. Procédé (300) selon la revendication 1, dans lequel :
la première RAT est un accès radio terrestre de système de télécommunication mobile universel évolué, EUTRA, et
la seconde RAT est la nouvelle radio, NR, 5G.

7. Procédé (300) selon la revendication 1, comprenant en outre :
la réception du paramètre d'utilisation via une interface utilisateur (230) du dispositif utilisateur (102).

8. Procédé (300) selon la revendication 1, dans lequel la sélection survient en réponse au fait que le dispositif utilisateur (102) est mis sous tension ou réalise une transition depuis un mode faible puissance dans un mode plein puissance, lorsque le dispositif utilisateur (102) n'a pas encore été lié à un CN (114).

9. Dispositif utilisateur (102) configuré pour fonctionner sur une première technologie d'accès radio, RAT, et une seconde RAT, et configuré pour supporter les appels vocaux basés sur paquets sur la première RAT, et pour fonctionner dans un mode centré sur la voix via un paramètre d'utilisation, le dispositif utilisateur (102) comprenant :
un matériel de traitement (200) ;
un support non transitoire qui stocke en son sein des instructions qui, lorsqu'elles sont exécutées par le matériel de traitement, amènent le dispositif utilisateur (102) à réaliser un procédé (300) selon l'une quelconque des revendications précédentes.

10. Support non transitoire stockant des instructions qui, lorsqu'elles sont exécutées par un matériel de traitement (200) d'un dispositif utilisateur (102), amènent le dispositif utilisateur à réaliser un procédé (300) selon l'une quelconque des revendications 1 à 8.
